# EUROPEAN PATENT SPECIFICATION

(11) **EP 4 178 126 B1**
(45) Date of publication and mention of the grant of the patent: **21.10.2026**
(21) Application number: 22199523.6
(22) Date of filing: 28.04.2017
(51) Int. Cl.: H04J 3/06, H04L 7/04, H04J 3/16

(54) **FRAME SYNCHRONIZATION**
RAHMENSYNCHRONISATION
SYNCHRONISATION DE TRAME

(43) Date of publication of application: 10.05.2023
(62) Document number(s) of the earlier application(s) in accordance with Art. 76 EPC: 17723030.7 / 3 616 354
(73) Proprietor: Telefonaktiebolaget LM ERICSSON (PUBL), 16483 Stockholm (SE)
(72) Inventor: Pacchetti, Roberto, 16152 Genova (IT); Sanguinetti, Davide, 16152 Genova (IT)
(74) Representative: Ericsson

(56) References cited:
- US-A1- 2003 037 297
- US-A1- 2011 078 545

## Description

### Technical Field

The embodiments herein relate to a method and apparatus for frame synchronization and in particular, to the provision of fast-locking and low-latency framing and synchronization.

### Background

US 2003/037297 describes a frame synchronization device for receiving frames and establishing frame synchronization. The frame synchronization device attempts to detect a first synchronization data in a received data in a frame hunting state, and enters a synchronous state when the first synchronization data is detected for a first predetermined number of consecutive frames. The device corrects errors of the data in the frame based on a check data in the frame.

The use of Dense Wavelength Division Multiplexing (DWDM) for optical transport over the Common Public Radio Interface (CPRI) clients allows for a reduction of the number of optical fibers needed to interconnect network nodes of a communication network. An example of an optical transport is provided by the Optical Transport Network, OTN, standard. It provides Quality of Service (QoS), forward error correction (FEC), multiple levels of tandom connection monitoring (TCM), and transparent multiplexing of different client signals, including Ethernet and Synchronous Digital Hierarchy (SDH). The mapping of CPRI clients over the OTN was included in Supplement 56 to the International Telecommunication Union Telecommunication Standardization Sector's (ITU-T) G-series Recommendations.

There are stringent frequency and clock tolerance requirements specified for CPRI clients. However, the current OTN solution does not guarantee this required performance. The responsibility of determining whether or not the required performance is met is instead placed with the network operator. Any noise generated by the OTN would have to be handled by the CPRI system in order to meet the application requirements.

Synchronous mapping is enabled by a particular OTN signal, OTU2r, for some clients, but there are limitations for high client bitrates.

The current solution of mapping CPRI clients over OTN has a frame period of about 10.330 µs (OTU2r) and leads to high latency, especially when the FEC is enabled. The FEC block duration is one quarter of the frame period, about 2.58 µs. Usually the latency introduced by the FEC decoding is at least twice the block duration, so more than 5 µs for one direction.

### Summary

The invention is defined by the independent claims. Further preferred embodiments are detailed in the dependent claims.

### Brief Description of the Drawings

For a better understanding of the present disclosure, and to show how it may be put into effect, reference will now be made, by way of example, to the accompanying drawings, in which:
Figure 1 illustrates an example of a frame structure used to provide synchronization according to some embodiments;
Figure 2 illustrates a method of frame synchronization according to some embodiments;
Figure 3a illustrates an example of the method of Figure 2 in more detail;
Figure 3b shows an example of a method according to another embodiment;
Figure 4 illustrates a block diagram of a framer for transmitting and receiving frames according to some embodiments;
Figure 5 illustrates a frame synchronization and descrambler according to some embodiments;
Figure 6 illustrates an example of a frame synchronization apparatus for providing frame synchronization according to some embodiments; and
Figure 7 illustrates an example of a frame synchronization apparatus for providing frame synchronization according to some embodiments.

### Description

The following sets forth specific details, such as particular embodiments for purposes of explanation and not limitation. But it will be appreciated by one skilled in the art that other embodiments may be employed apart from these specific details. In some instances, detailed descriptions of well-known methods, nodes, interfaces, circuits, and devices are omitted so as not obscure the description with unnecessary detail.

The present disclosure provides methods and apparatus for frame synchronization, for example for an agnostic optical transport for CPRI and other types of clients in a transport network for radio front-haul and/or backhaul of fixed and mobile access networks. The provided frame structure, which may also include forward error correction (FEC), allows for a fast and robust synchronization method to obtain frame synchronization in a receiver. In some examples, the examples of the present disclosure may be used for transport of frames in a radio access network. For example, the frames may be transmitted between distributed parts of a radio base station, e.g. for carrying radio data between a baseband processing unit and a remote radio unit.

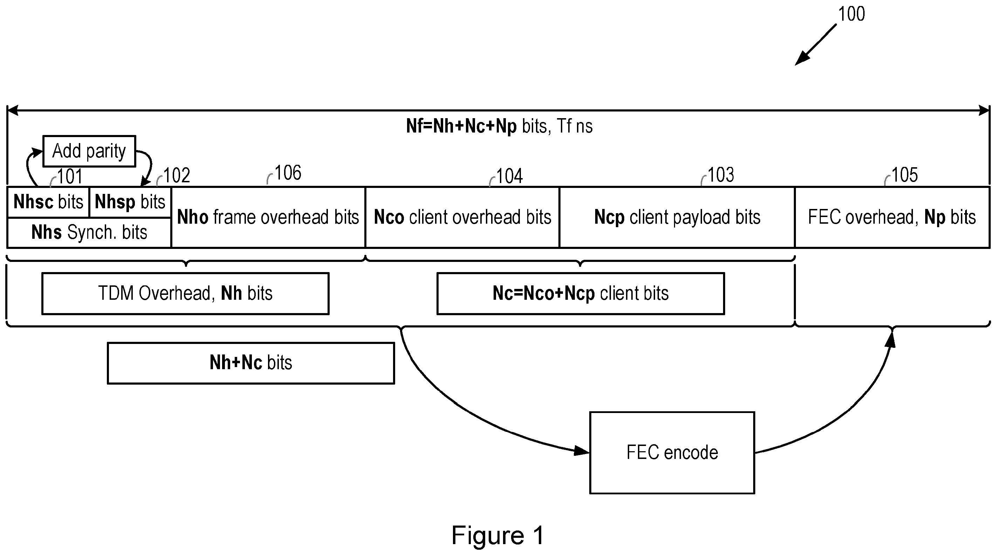

**Figure 1** illustrates an example of a frame structure used to provide synchronization. In this embodiment the frame structure is an Agnostic Transport for Fronthaul (ATF) frame structure. A frame header, i.e. represented as **Nh** overhead bits of the frame, for a frame 100 used in a communication network is provided. The frame header comprises a first field comprising a frame counter value representing the number of the frame in a sequence of frames. In this example the first field is the frame counter value, the **Nhsc** bits 101, where **Nhsc** is an integer value. The frame counter value may also be referred to as a multi frame counter (MFC). The frame counter value is a number which, in some embodiments, may increment by one after each frame.

The frame header also comprises a second field comprising frame check bits for checking the validity of the frame counter value. In this example the frame check bits are **Nhsp** bits 102, where **Nhsp** is an integer value. In this example, the **Nhsp** bits 102 are parity bits for checking the value of the **Nhsc** bits 101. These may be dedicated parity bits for allowing error correction and detection within the frame counter value.

The validity of the frame counter value can then be used to determine a synchronization status of a receiver of the sequence of frames.

In this example, the frame structure is generated by taking a suitable number **Ncp** of client payload bits 103, where **Ncp** is an integer value, for a frame. Optional **Nco** client overhead bits 104 can be added, where **Nco** is an integer value. The **Nco** client overhead bits 104 may comprise, for example, communication channels, synchronization and/or delay information. The total number of client bits is therefore **Nc= Ncp+Nco.** The **Nh** header bits, where **Nh** is an integer value, may then be added to these client bits **Nc.** The header bits, **Nh,** may comprise the synchronization bits **Nhs,** which comprise the frame counter value bits **Nhsc** and the frame check bits **Nhsp,** and frame overhead bits **Nho** 106 which may be used to define the payload type and other such information.

The frame overhead bits **Nho** 106 may be used to transport frame and client related information. The frame counter value (MFC, **Nhsc** bits 101) may have up to **2^{Nhsc}** different values. The payload type may be encoded on these bits when the frame counter value MFC/Nhsc is zero. Other values and/or bits may be used to inset status, optical supervision channels or any other useful information.

Frame synchronization may be performed by a receiver of the frame structure of Figure 1. The frame synchronization may be performed by finding **Nhs** bits that have a valid frame counter value and check bit structure using a forward error correction, FEC, decoder. The FEC decoder may either find that the chosen **Nhs** bits are correct (i.e. code without errors), not correctable, correctable. If the chosen **Nhs** bits are not correct or correctable, the decoder may process a different selection of **Nhs** bits in a different position within the received data bit stream. If the chosen **Nhs** bits are correct or correctable, the value of the frame counter value can be extracted.

After a frame length **(Nf** bits) the FEC decoder may perform the check again. If the code is again correct or correctable, a further check may be performed to confirm synchronization by checking if the new value of frame counter value MFC/Nhsc is one more than the previous value of the frame counter value.

By performing error correction on the frame counter value the robustness of the frame locking is increased in the presence of high bit-error rates. Frame synchronization may also therefore be obtained using a short header with a frame counter value, e.g. Nhsc, and frame check bits, e.g. Nhsp.

In the embodiment of Figure 1, the ATF frame structure is provided such that it is able to transport one CPRI client (e.g. CPRI option 10) in transparent, bit-synchronous mode. The ATF frame bitrate in this example is 27648 Mbit/s, the frame length, **Nf** = 2400 bits, and the frame duration, **Tf** is 86.806 ns (11.52 MHz). The 125 µs period is exactly 1440 frames in this example. Short frame lengths, i.e. a frame duration lower than 100 ns, help keep low the latency for the transmitted CPRI clients.

Further, in Figure 1 **Np** FEC bits 105 are provided for correction of the entire frame may be included in the frame header. These FEC overhead bits may be **Np** = 120 bits, or 5% of the total frame length.

In some examples the synchronization bits may amount to 16 bits, e.g. 8 bits for the frame counter value (Nhsc bits), and 8 bits for the check bits (Nhsp bits). In this example, two Hamming [8,4] codes can be used, with the ability to correct two bit errors and detect up to 4 bit errors.

The frame overhead bits **Nho** may amount to 16 bits. The first byte of the first frame may contain the payload type. The total bitrate of the overhead may be 184.32 Mb/s (i.e. 27648*16/2400). As the bitrate is directly related to a multiple of the basic CPRI rate (3.84 Mb/s) this allows for simple, transparent bit-synchronous mapping of CPRI frames. It is also therefore possible to provide transparent, asynchronous mapping of Ethernet or other types of clients.

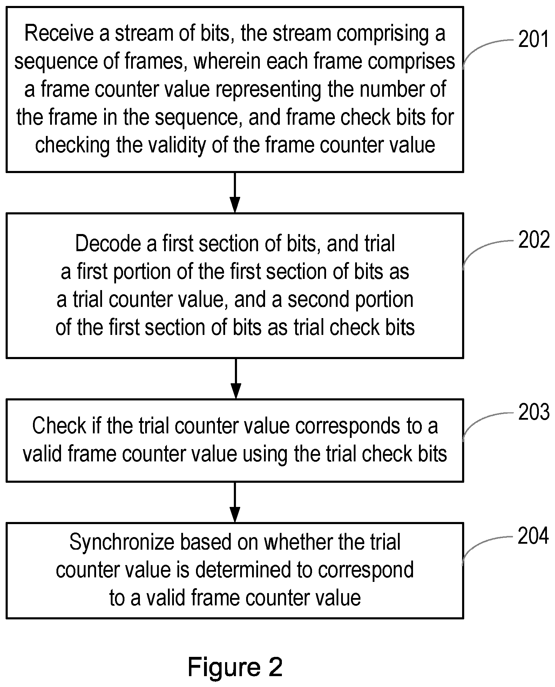

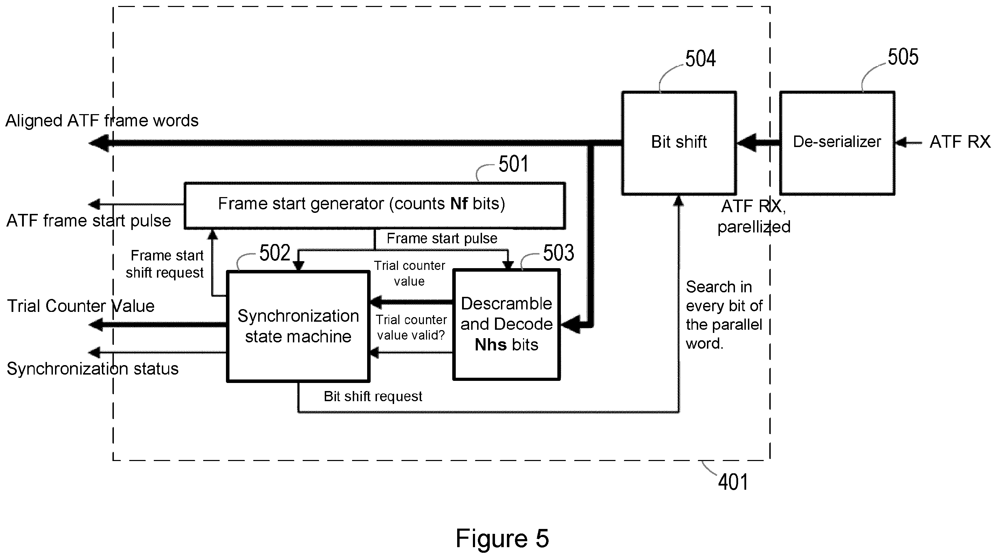

**Figure 2** illustrates a method of frame synchronization according to some embodiments. In some embodiments, the method is performed by a frame synchronization apparatus (for example as described later with reference to Figures 5, 6 and 7). In step 201, the method comprises, receiving a stream of bits, the stream comprising a sequence of frames, wherein each frame comprises a frame counter value representing the number of the frame in the sequence, and frame check bits for checking the validity of the frame counter value. In some embodiments the frames may comprise a frame structure such as the Agnostic Transport for Fronthaul (ATF) frame structure as described in Figure 1. The number of the frame may be considered as a position of the frame in a sequence of frames.

The stream of frames therefore each comprises a frame counter value (e.g. Nhsc bits) and frame check bits (e.g. Nhsp bits) for the frame counter value. However, as of yet, the frame synchronization apparatus is unaware of where the frames are delineated in the stream of bits.

In step 202 the method comprises decoding a first section of bits, and trialling a first portion of the first section of bits as a trial counter value, and a second portion of the first section of bits as trial check bits. The method is therefore trialling two portions of the section of bits as a trial counter value and trial check bits, in order to check whether these bits correspond to a frame counter value and frame check bits.

In some embodiments the first section of bits is 16 bits long with the first portion being the first 8 bits, and the second portion being the second 8 bits.

In step 203 the method comprises checking if the trial counter value corresponds to a valid frame counter value using the trial check bits. In some embodiments, therefore, the frame synchronization apparatus checks the value of the trial counter value using the value of the trial check bits. In some embodiments, the trial counter value corresponds to a valid frame counter value if the trial counter value is correct or is correctable using the trial check bits.

In an example where the first section of bits is 16 bits long with the first portion being the first 8 bits and the second portion being the second 8 bits, the trial counter value is considered correctable if no more than two bits of the trial counter value are incorrect.

In step 204, the method comprises synchronizing based on whether the trial counter value is determined to correspond to a valid frame counter value. In some embodiments the synchronizing based on whether the trial counter value corresponds to a valid frame counter value comprises determining a synchronization status, wherein the synchronization status is either: synchronized, unsynchronized or pre synchronized. In this example the pre synchronized status is a status which allows the synchronization status to be changed to synchronized.

The method therefore determines whether or not the first portion of bits corresponds to a valid frame counter value, in other words, whether the first section of bits corresponds to part of a frame containing a frame counter value and frame check bits. If the first portion of bits corresponds to a valid frame counter value, the frame synchronization block can then determine where in the stream of bits the delineations between frames lie, and synchronize with the frames.

In some embodiments the delineations between frames may be indicated by a pulse signal which may be output by a frame synchronization apparatus performing the above method.

Thus, the bits of the frame counter value are associated with check bits. The check bits provide for detection and correction of errors in the bits of the frame counter value. A synchronization status is based on whether the frame counter value is determined to be valid, either due to the original bits being determined to be correct or corrected using the check bits. The forward error correction provided by the check bits allows for finding the bits of the frame counter value, e.g. when synchronization has been lost or is not accurate. The check bits provide a positive determination that the section of bits being used for the frame counter value is the correct section of bits in the frame.

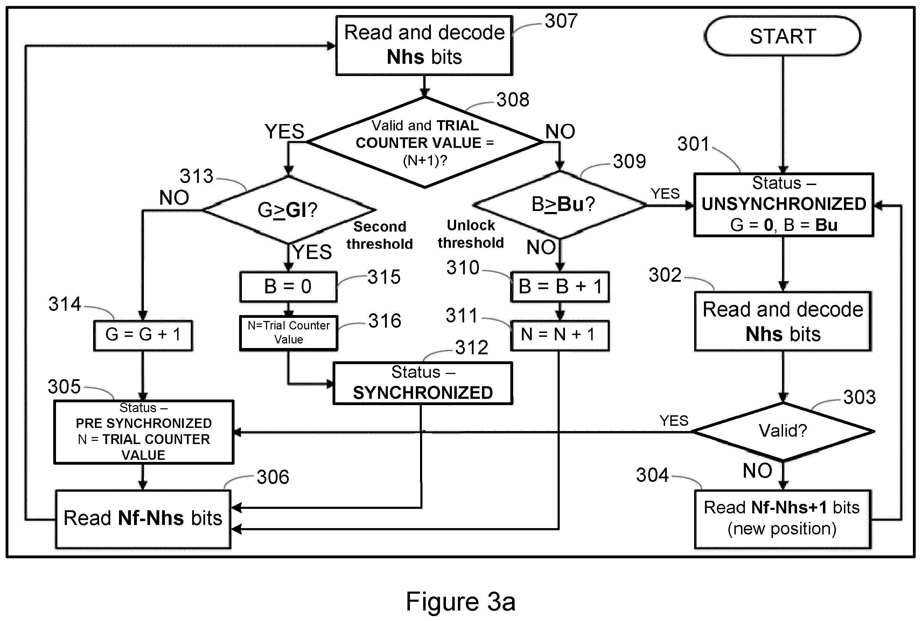

**Figure 3a** illustrates in more detail the steps 202 to 204 of the method of Figure 2. In some embodiments the method of Figure 3a is performed by a frame synchronization apparatus. The frame synchronization apparatus may be a part of a node in a radio access network. Transmission of the frames may use optical, electronic, radio, microwave or any other form of communication.

In step 301, the method starts with a synchronized status of unsynchronized. A count of good frames, G, for counting the number of consecutive valid frames received may be set to zero. A count of invalid frames, B, for counting the number of consecutive invalid frames received, may be set to a threshold value of Bᵤ.

In step 302, the method comprises reading and decoding a first section of bits comprising **Nhs** bits, where **Nhs** is an integer value, trialling a first portion of the first section of bits as a trial counter value, and a second portion of the first section of bits as trial check bits. In other words, this **Nhs** bits are separated into a trial counter value, comprising **Nhsc** bits, and trial check bits, comprising **Nhsp** bits. The trial counter value may potentially correspond to a valid frame counter value if, for example, the first portion of bits comprises the same bits as the frame counter value for a frame.

In step 303 the method comprises determining if the trial counter value corresponds to a valid frame counter value. In some embodiments, the trial counter value corresponds to a valid frame counter value if the trial counter value is correct or is correctable using the trial check bits. In an example where **Nhs** is equal to 16 bits with the first portion being the first 8 bits and the second portion being the second 8 bits, the trial counter value is considered correctable if the trial check bits are sufficient to provide for forward error correcting of the trial counter value. For example, the trial counter value is considered correctable if no more than two bits of the trial counter value are incorrect.

If the trial counter value does not correspond to a valid frame counter value and the synchronization status is unsynchronized, which it would be at the start of the process, the method passes to step 304.

In step 304 the method comprises decoding a second section of bits of the stream of bits, wherein the second section of bits is different from the first section of bits. In some embodiments, the second section of bits is shifted by a frame length plus one bit along the stream of bits with respect to the first section of bits. By doing this the method can assume for the trial counter value a slightly different position along the stream of bits, in order to determine if this new position will lead to synchronization.

Steps 301 to 304 may be repeated for different sections of bits, each shifted by a frame length plus (or minus) one or more bits from the previous section of bits, until the trial counter value for a particular section of bits is found in step 303 to correspond to a valid frame counter value.

If in step 303 a trial counter value is found to correspond to a valid frame counter value, the method passes to step 305. In step 305 the method comprises setting the synchronization status to pre synchronized and setting a previous counter value, N, to the trial counter value. The pre synchronized status is a status which allows the synchronized status to be changed to synchronized. In some embodiments, a previous counter value, N, is set to equal the trial counter value for the particular section of bits.

In step 306 the method comprises reading the remaining bits making up the rest of the frame length. For example, reading the client payload bits **Ncp** of the frame, and the other overhead bits of the frame, such as the client overhead bits **Nco,** and frame overhead bits **Nho,** and any FEC overhead **Np** bits.

In step 307 the method comprises reading a third section of **Nhs** bits shifted a frame length, **Nf,** along the stream of bits with respect to the particular section of bits for which the trial counter value was found to correspond to a valid frame counter value. In other words, as the method has found a particular set of bits to contain a valid frame counter value, the method will therefore look a frame length away from the particular section of bits, to check if the trial counter value for what should be the next frame value is also valid. Similarly to as in step 302, a first portion of the third section of bits is set as a trial counter value and a second portion of the third section of bits is set as trial check bits.

In step 308 the method comprises performing step 303 for the third section of bits. In other words, the method of step 308 comprises checking if the trial counter value corresponds to a valid frame counter value. Again, the trial counter value may be considered to correspond to a valid frame counter value if the trial counter value is correct, or if the trial counter value is correctable using the trial check bits. Step 308 also may comprise checking if the trial counter value for the third section is next in sequence to the previous counter value, N. As explained in step 305, the previous counter value N is set to the value of the trial counter value when the synchronization status changes to pre synchronized. Therefore, for the third section of bits, which is a frame length along from the particular set of bits which was found to correspond to a valid frame counter value, the trial counter value should theoretically be one more than the previous counter value, if it is determined to be valid.

It will be appreciated, that the actual value of the frame counter value in the frames may form any type of sequence, and may therefore not necessarily increment by one for each frame.

If, in step 308, the trial counter value counter value does not correspond to a valid frame counter value or the trial counter value is not next in sequence to the previous counter value, the method passes to step 309. In step 309, the method comprises determining if a count of invalid frames, B, is more than or equal to a first threshold number, Bᵤ.

If at this step the method is passing through a first loop after the synchronization status has moved from unsynchronized to pre synchronized, then the count of invalid frames in some embodiments will have just been set to Bᵤ when the status was set to unsynchronized, in which case, the count of bad frames at this stage would be equal to the first threshold number Bᵤ.

If, on the other hand, the synchronization status was previously synchronized, i.e. the method is not passing through a first loop after the synchronization status has moved from unsynchronized to pre synchronized, then the count of invalid frames may have been set to zero in a previous loop, as will be described later, and therefore the count of invalid frames at step 309 may or may not be more than or equal to the first threshold number Bᵤ.

If at step 309 the count of invalid frames, B, is more than or equal to the first threshold number, the method passes back to step 301 and the status is set to unsynchronized, and the count of good frames G set to zero, and the count of consecutive invalid frames received, i.e. B, set to the first threshold Bᵤ.

If, at step 309 the count of invalid frames, B, is not equal to or more than the first threshold number, Bᵤ, the method passes to step 310 in which the count of invalid frames B is increased by one. The method may also then pass to step 311 in which the previous counter value N, is incremented by one.

The synchronisation status may then be maintained, as either synchronized or pre synchronised, i.e. in view of the existing status being either synchronised or pre synchronised.

Again, the method may then pass to step 306 to check a different set of bits shifted a frame length along the stream of bits.

Returning to step 308, if the trial counter value corresponds to a valid frame counter value and the trial counter value is next in sequence to the previous counter value, N, the method passes to step 313. In step 313 the method comprises comparing a count of good frames, G, to a second threshold value Gᵢ.

If the count of good frames, G, is not equal to or more than the second threshold value Gᵢ, then the method passes to step 314 in which the count of good frames G is increased by one, i.e. G = G + 1.

The method then passes to step 305, in which the synchronization status is maintained as pre synchronized. The previous counter value, N, is set to the trial counter value.

As described in relation to step 301, when the status is set to unsynchronized, then the count of good frames is set to zero. The method must therefore pass through Gₗ iterations of finding valid frame counter values before the count of good frames will pass over the Gₗ threshold. The method may then pass back to step 306 to check a different set of bits shifted a frame along the stream of bits.

If at step 313 the count of good frames G is more than or equal to the second threshold value Gₗ, the method passes to step 315 in which the count of invalid frames, B, may be set to zero. This resets the number of invalid frames so that Bᵤ iterations of bad fames must be found before synchronization is lost.

The method may then pass to step 316 in which the previous counter value, N, is set to the trial counter value, and step 312 in which the synchronization status is set to synchronized.

Again, the method may then pass to step 306 to check a different set of bits shifted a frame along the stream of bits.

In general therefore, a frame synchronization apparatus performing the method of Figure 3a may decode **Nhs** bits from a stream of bits and sends out a trial counter value and a decoding result of whether or not the trial counter value corresponds to a valid frame counter value. The result may then be used to change the synchronization status of the frame synchronization apparatus.

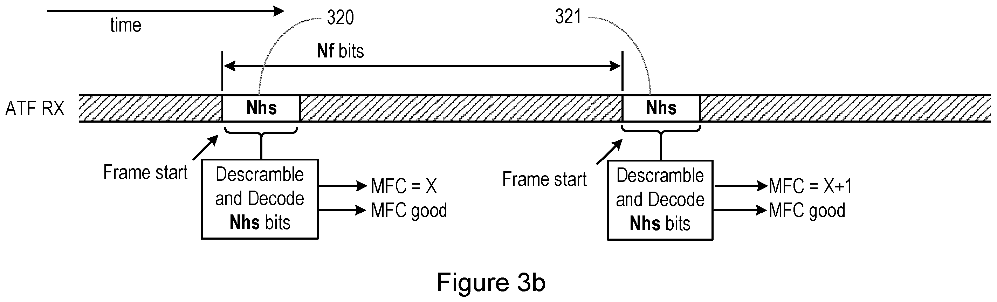

**Figure 3b** illustrates a more high-level example of decoding counter values when the **Nhs** bits being decoded are in the correct position within the frame. The first section of **Nhs** bits 320 is descrambled and decoded and a valid frame counter value, X, is found. The method therefore looks a frame length, **Nf** bits, along the frame to a second section of **Nhs** bits 321. As the frame start point has been found correctly, these are descrambled and decoded to find another valid frame counter value of X+1.

A previous counter value, N, keeps track of the value of the relevant frame counter value that the apparatus is trying the find. Any sum operations may be performed in modulo logic.

The count of good frames, G, may be used to count the number of good frames received. The second threshold Gₗ is the number of valid frame counter values required in order to obtain a synchronization status of synchronized. Therefore, if the procedure of Figure 3b is reiterated such that this second threshold Gₗ of valid frame counter values is reached, a synchronized status is achieved.

During the synchronized or pre synchronized synchronization status', any uncorrectable trial counter values, or out of sequence trial counter values may be discarded and considered invalid. The count of invalid frames, B, keeps track of the consecutive invalid frame counter values received (uncorrectable or out of sequence). If the first threshold, Bᵤ, for the count of invalid frames is reached the synchronization is lost, and the synchronization status may be set to unsynchronized.

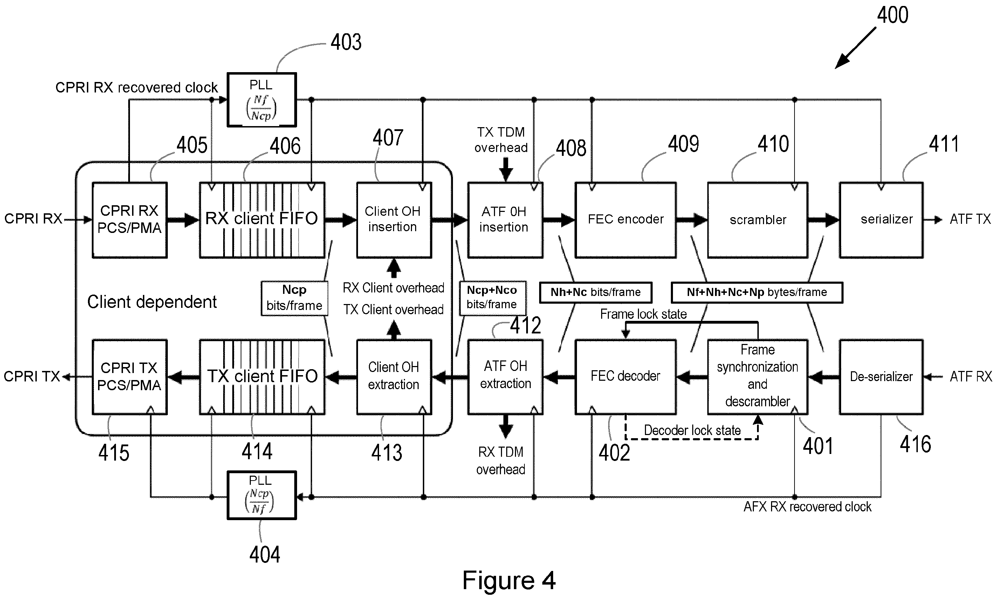

**Figure 4** illustrates a block diagram of a framer 400 for transmitting and receiving frames according to some embodiments. A frame synchronization and descrambler block 401, for example performing a method as described above, can interact with a FEC decoder 402 for the whole frame. The decoder result can be used to enhance the robustness of the synchronization.

Phase locked loops (PLL) 403 and 404, may be used to regenerate frequencies from the client side and frame side (and vice-versa), for example using simple ratios.

On the transmitting side of the framer 400, the framer 400 comprises a receiver 405 for receiving CPRI payload data from clients. The CPRI data is forwarded to a client first in first out (FIFO) buffer 406 which outputs the payload data with **Ncp** bits per frame. The client overhead data bits **Nco** are then inserted at the client overhead inserter 407 such that the frames now comprise **Ncp+Nco = Nc** bits/frame. The transmitter overhead data bits **Nh** may then be inserted into the frames by the transmitting overhead inserter 408. These transmitter overhead data bits may comprise the synchronization bits **Nhs** comprising the frame counter value and the frame check bits, plus any other frame overhead bits, e.g. frame overhead bits **Nho** of Figure 1. The transmitting overhead inserter 408 then forwards the **Nh+Nc** bits per frame (plus any other bits such as **Nho)** to a forward error corrector encoder 409 where extra FEC overhead bits, **Np** are added to each frame. The total frame length is then **Nh+Nc+Np** (where **Nh = Nhs + Nho,** and **Nc = Nco + Ncp).** These frames are then scrambled by a scrambler 410 and transmitted by a serializer 411. The frames may be scrambled with a synchronous scrambler 410. The scrambler pattern may be fixed on each frame, so it can be performed on the whole frame and will not therefore prevent any parallel frame recognition process.

On the receiving side of the framer 400, a de-serializer 416 receives a stream of bits and forwards the stream to a frame synchronizer and descrambler 401. An example of the frame synchronizer and descrambler 401 is shown in more detail in Figure 5. The frame synchronizer and descrambler 401 may output a synchronization status of synchronized, pre synchronized or unsynchronized, to an FEC decoder 402. The frame synchronizer and descrambler 401 may perform a method as described with reference to Figures 2 and 3 above.

The FEC decoder 402 will determine whether the entire frame is valid in terms of whether or not it can be corrected, and may correct the frame if it is correctable. The FEC decoder 402 may then output the corrected frames to a receiving overhead extractor 412. The Forward Error Correction (FEC) on the whole frame enables reliable transmission of information and can be used to further increase the robustness of the frame synchronization described earlier.

The receiving overhead extractor 412 may extract the received overhead bits **Nh.** The remaining bits may then be forwarded to the client overhead extractor 413, which may extract the client overhead bits **Nco** and transmit the remaining payload bits to the client FIFO buffer 414 in order to transmit the payload bits, via a transmitter 415 to the client, for example as a CPRI transmission.

In some embodiments the frame synchronizer and descrambler 401 utilises feedback information from the FEC decoded 402.

**Figure 5** illustrates an example of a frame synchronization and descrambler 401. The frame synchronizer and descrambler may be the frame synchronizer and descrambler of Figure 4. The frame synchronization and descrambler 401 receives a stream of de-serialized bits from de-serializer 505. The stream of bits may comprise frames wherein the frames have an ATF structure as described with reference to Figure 1.

A frame start generator 501 may count a stream of bits, e.g. a number of bits corresponding to a number of bits **Nf** forming a frame, and will trigger when a synchronization state machine 502 will start decoding a first section of **Nhs** bits. The synchronization state machine 502 and descrambler and decoder 503 may descramble the stream of bits and perform a method as described in reference to Figures 2 and 3. If the decoded **Nhs** bits result in an unsynchronized status, the synchronization state machine 502 will send a frame start shift request to the frame start generator 501 in order to shift the position in which the **Nhs** decoded bits fall.

The de-serializer 505 may comprise clock and data recovery and parallelization of the incoming serial stream of bits. A SIPO (serial in parallel out) extracts a number of bits, for example with a slow clock locked to the incoming data rate. For example an input bitrate of 27648 Mbit/s, parallelization to 80 bit with the recovered clock of 1/80 of the incoming data rate (345.6 MHz). The parallelized received data may not be aligned to the frame start, therefore the bit shift 504 may use a subset of the two last received words (barrel shifter) to find the start of the frame.

Since the frame duration may be several clock cycles (30 clock cycles in the example) it is possible to check for valid counter values at every clock cycle, and have different state machines in parallel with only one decoder. For example, there may be 80 bit words, 30 searched in parallel with 80 different possible bit shift values.

In some examples, a simple error detection and correction for this header allows multiple synchronization state machines to search for the frame start in parallel in several positions to speed-up the synchronization or frame lock time. There may therefore be multiple synchronization state machines working in parallel checking different positions within the bits stream, in order to locate a valid frame counter value.

The stream of bits is output from the frame synchronization and descrambler 401 to a FEC decoder 402 of Figure 4, along with the trial counter value, synchronization status, and frame start pulse which gives an indication of the synchronized start for each frame.

The embodiments described above provide for the use of the synchronization bits **Nhs,** which allow for a short frame length choice and therefore minimize the latency introduced by the framer, which is beneficial for CPRI clients.

The frame bitrate allows simple bit-synchronous mapping with clock recovery. The clients can be mapped transparently, with deterministic latency. For example, CPRI option 10 bitrate is 24330.24 Mb/s. The ratio of the frame, for example the ATF frame of Figure 1, is 25/22, which is easily attainable with PLLs. In this example, the client payload bits are exactly **Ncp** = 2112, corresponding to 32 x 66 bit words. In this example there are **Nco** = 136 client overhead bits (17 bytes per frame). Therefore the total bitrate of the overhead 27648*136/2400 = 1566.72 Mb/s.

For another example, the 25G Ethernet bitrate is 25781.25 Mb/s. The client payload bits are 2237.96. Therefore by having **Ncp** = 2240 plus **Nco** = 8 the frame allows for asynchronous mapping plus payload stuffing information.

The last payload byte may be used for stuff data, for example for rate adaptation. In this example, one byte of the payload overhead is used to signal the stuff data.

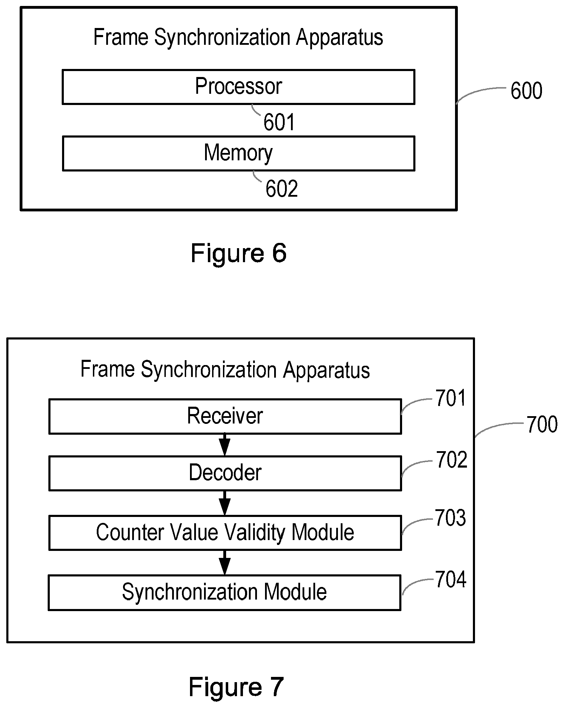

**Figure 6** illustrates a frame synchronization apparatus 600 for providing frame synchronization. The frame synchronization apparatus 600 may be a frame synchronization and descrambler block 401 as described in Figures 4 and 5. In this embodiment the frame synchronization apparatus 600 comprises a processor 601 and a memory 602 said memory 602 containing instructions, e.g. as a computer program, executable by said processor 601. The apparatus 600 is operative to receive a stream of bits, the stream comprising a sequence of frames, wherein each frame comprises a frame counter value representing the number of the frame in the sequence, and frame check bits for checking the validity of the frame counter value. The apparatus 600, using the processor 601, is operative to decode a first section of bits, and trial a first portion of the first section of bits as a trial counter value, and a second portion of the first section of bits as trial check bits. The apparatus 600 is operative to check if the trial counter value corresponds to a valid frame counter value using the trial check bits, and synchronize based on whether the trial counter value is determined to correspond to a valid frame counter value.

The processor 601 is configured to carry out any example described, in association with the memory 602. In some aspects, the processor 601 is arranged to execute a computer program, which executes or controls a method described. The processor 601 may be considered as processing circuitry. Processing circuitry is provided using any combination of one or more of a suitable central processing unit (CPU), multiprocessor, microcontroller, digital signal processor (DSP), etc., capable of executing software instructions stored in a computer program product e.g. in the form of a storage medium. The processing circuitry 601 may be provided as an application specific integrated circuit (ASIC), or field programmable gate array (FPGA). The memory 602 may comprise persistent storage, which, for example, can be any single one or combination of magnetic memory, optical memory, solid state memory or even remotely mounted memory.

The frame synchronization apparatus 600 may be operative to perform a method as described with relation to any example or any of the above figures.

Aspects of the disclosure may provide a computer program, comprising instructions which, when executed on at least one processor (e.g. processor 601), cause the at least one processor to carry out a method according to any example. Aspects of the disclosure may provide a computer program product comprising a computer program, as specified above. The computer program product, or a carrier for the computer program product, may include an electrical signal, an optical signal, a radio signal, a magnetic tape or disk, an optical disk or a memory stick.

**Figure 7** illustrates a frame synchronization apparatus 700 for providing frame synchronization. The frame synchronization apparatus 700 may be a frame synchronization and descrambler block 401 as described in Figures 4 and 5. The frame synchronization apparatus comprises a receiver 701 for receiving a stream of bits, the stream comprising a sequence of frames, wherein each frame comprises a frame counter value representing the number of the frame in the sequence, and frame check bits for checking the validity of the frame counter value. The frame synchronization apparatus 700 also comprises a decoder 702 for decoding a first section of bits, and trialling a first portion of the first section of bits as a trial counter value, and a second portion of the first section of bits as trial check bits. The frame synchronization apparatus may further comprise a counter value validity module 703 for checking if the trial counter value corresponds to a valid frame counter value using the check bits. The frame synchronization apparatus may further comprise a synchronization module 704 for synchronizing based on whether the trial counter value is determined to correspond to a valid frame counter value. The frame synchronization apparatus 700 may be implemented using a processor and memory.

There is therefore provided a frame structure, and apparatus and method for synchronization of such a frame structure. The proposed apparatus and method require no frame alignment patterns or coding overhead. Furthermore, the method allows for a parallel search of the frame start, which can speed up the time required for synchronization. The frame check bits for error correcting of the frame counter value allow for reliable frame synchronization even with high input bit-error rates. Aspects of the disclosure provide for transmission and receiving of data signals in frames between nodes, e.g. in a radio access network. The option of having Forward Error Correction on the whole frame further increases the robustness of the synchronization process. An example of the disclosure provides for a transmitter, or a method of transmitting, for frames having both a frame counter value and check bits for checking that the decoded bits are bits of the frame counter value and/or for determining the bits of the frame counter value are correct and/or correctable.

It should be noted that the above-mentioned embodiments illustrate rather than limit the invention, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method of frame synchronization in a radio access network for radio fronthaul and/or backhaul, the method comprising:
a) receiving (201) a stream of bits in a radio access network, the stream comprising a sequence of frames, wherein each frame comprises a frame counter value representing the number of the frame in the sequence, and frame check bits for checking the validity of the frame counter value;
b) decoding (202) a first section of bits comprising a first portion (101) representing a trial frame counter value, and comprising a second portion (102) representing parity check bits;
c) checking (203) if the trial frame counter value corresponds to a valid frame counter value using the parity check bits, and if not, correcting the trial frame counter value using the parity check bits; and
d) synchronizing (204) based on whether the trial counter value is determined to correspond to a valid frame counter value.

2. The method as claimed in claim 1 wherein the parity check bits are two Hamming [8,4] codes.

3. The method as claimed in claim 1 or 2 wherein synchronizing (204) based on whether the trial counter value (101) corresponds to a valid frame counter value comprises determining a synchronization status, wherein the synchronization status is either: synchronized, unsynchronized or pre synchronized, wherein the pre synchronized status is a status which allows the synchronization status to be changed to synchronized.

4. The method as claimed in claim 3 further comprising:
if the trial frame counter value (101) does not correspond to a valid frame counter value and the synchronization status is currently unsynchronized,
resetting the synchronization status to unsynchronized.

5. The method as claimed in claim 4 further comprising, if the synchronization status is set to unsynchronized:
decoding a second section of bits of the stream of bits, wherein the second section of bits is different from the first section of bits; and
performing steps b), c) and d) for the second section of bits in place of the first section of bits.

6. The method as claimed in 5 wherein the second section of bits is shifted by a frame length plus one bit along the stream of bits with respect to the first section of bits.

7. The method as claimed in 6 further comprising, repeating steps b) c) and d) for different sections of bits, each shifted by a frame length plus one bit from the previous section of bits, until the trial counter value for a particular section of bits is found to correspond to a valid frame counter value.

8. The method as claimed in any one of claims 3 to 7 further comprising:
if the trial counter value (101) corresponds to a valid frame counter value and the current synchronization status is unsynchronized;
setting the synchronization status to pre synchronized and setting a previous counter value to the trial counter value; or, if the synchronization status is set to pre synchronized or synchronized, the method further comprises:
reading a third section of bits shifted a frame length along the stream of bits with respect to the particular section bits for which the trial counter value was found to correspond to a valid frame counter value.

9. The method as claimed in 8 wherein if the synchronization status is set to pre synchronized or synchronized, the method further comprises:
performing steps b), c) for the third section of bits; and
checking if the trial frame counter value for the third section is next in sequence to the previous counter value; or,
wherein if the synchronization status is set to pre synchronized or synchronized, the method further comprises:
if the trial frame counter value does not correspond to a valid frame counter value or the trial counter value is not next in sequence to the previous counter value, and if a count of invalid frames is more than a first threshold number;
setting the synchronization status to unsynchronized.

10. The method as claimed in 9 wherein if the synchronization status is set to synchronized, the method further comprises:
if the trial frame counter value does not correspond to a valid frame counter value or the trial frame counter value is not next in sequence to the previous counter value, and if a count of invalid frames is not more than a first threshold number;
increasing the count of invalid frames by one; and
maintaining the synchronization status as synchronized.

11. The method as claimed in any one of claims 9 to 10 wherein if the synchronization status is set to synchronized, the method further comprises:
if the trial frame counter value does not correspond to a valid frame counter value or the trial frame counter value is not next in sequence to the previous counter value, and if a count of invalid frames is not more than a first threshold number;
incrementing the previous counter value by one; or, wherein if the synchronization status is set to pre synchronized, the method further comprises:
if the trial counter value corresponds to a valid frame counter value and the trial counter value is next in sequence to the previous counter value, and if a count of good frames is not more than a second threshold number;
increasing the count of good frames by one;
setting the previous count value as the trial count value; and
maintaining the synchronization status as pre synchronized.

12. The method as claimed in 9 to 11 wherein if the synchronization status is set to pre synchronized or synchronized, the method further comprises:
if the trial counter value corresponds to a valid frame counter value and the trial counter value is next in sequence to the previous counter value, and if a count of good frames is more than a second threshold number,
setting the count of invalid frames to zero;
setting the previous counter value to the trial counter value; and
setting the synchronization status to synchronized.

13. A frame header for frame synchronization in a radio access network for radio fronthaul and/or backhaul, the frame header comprising:
a first field (101) comprising a frame counter value representing the number of the frame in a sequence of frames in a radio access network; and
a second field (102) comprising parity check bits for checking the validity of the frame counter value, wherein the parity check bits are useable to check if the frame counter value corresponds to a valid frame counter value;
and wherein the parity check bits are useable to correct the frame counter value check if the frame counter value does not correspond to a valid frame counter value.

14. A frame synchronization apparatus (600) for providing frame synchronization in a radio access network for radio fronthaul and/or backhaul, the frame synchronization apparatus comprising a processor (601) and a memory (602), said memory containing instructions which, when executed by the processor, cause the processor to carry out the method of claim 1.

15. A frame synchronization apparatus as claimed in claim 14, wherein the processor is configured to perform the method of any one of claims 2 to 12.

## Patentansprüche

1. Verfahren zur Rahmensynchronisation in einem Funkzugangsnetzwerk für Funk-Fronthaul und/oder - Backhaul, wobei das Verfahren Folgendes umfasst:
a) Empfangen (201) eines Bitstroms in einem Funkzugangsnetzwerk, wobei der Strom eine Folge von Rahmen umfasst, wobei jeder Rahmen einen Rahmenzählerwert, der die Nummer des Rahmens in der Folge darstellt, und Rahmenprüfbits zum Überprüfen der Gültigkeit des Rahmenzählerwerts umfasst;
b) Decodieren (202) eines ersten Abschnitts von Bits, der einen ersten Teil (101) umfasst, der einen Testrahmenzählerwert darstellt, und einen zweiten Teil (102) umfasst, der Paritätsprüfbits darstellt;
c) Überprüfen (203), ob der Testrahmenzählerwert einem gültigen Rahmenzählerwert entspricht, unter Verwendung der Paritätsprüfbits und, falls nicht, Korrigieren des Testrahmenzählerwerts unter Verwendung der Paritätsprüfbits; und
d) Synchronisieren (204) basierend darauf, ob bestimmt wird, dass der Testzählerwert einem gültigen Rahmenzählerwert entspricht.

2. Verfahren nach Anspruch 1, wobei es sich bei den Paritätsprüfbits um zwei [8,4]-Hamming-Codes handelt.

3. Verfahren nach Anspruch 1 oder 2, wobei das Synchronisieren (204) basierend darauf, ob der Testzählerwert (101) einem gültigen Rahmenzählerwert entspricht, Bestimmen eines Synchronisationsstatus umfasst, wobei der Synchronisationsstatus entweder synchronisiert, unsynchronisiert oder vorsynchronisiert ist, wobei der vorsynchronisierte Status ein Status ist, der es ermöglicht, den Synchronisationsstatus in synchronisiert zu ändern.

4. Verfahren nach Anspruch 3, ferner umfassend:
falls der Testrahmenzählerwert (101) nicht einem gültigen Rahmenzählerwert entspricht und der Synchronisationsstatus gegenwärtig unsynchronisiert ist,
Rücksetzen des Synchronisationsstatus auf unsynchronisiert.

5. Verfahren nach Anspruch 4, ferner umfassend, falls der Synchronisationsstatus auf unsynchronisiert gesetzt ist:
Decodieren eines zweiten Abschnitts von Bits des Bitstroms, wobei der zweite Abschnitt von Bits sich von dem ersten Abschnitt von Bits unterscheidet; und
Ausführen von Schritt b), c) und d) für den zweiten Abschnitt von Bits anstelle des ersten Abschnitts von Bits.

6. Verfahren nach Anspruch 5, wobei der zweite Abschnitt von Bits um eine Rahmenlänge plus einem Bit entlang des Bitstroms in Bezug auf den ersten Abschnitt von Bits verschoben ist.

7. Verfahren nach Anspruch 6, ferner umfassend Wiederholen von Schritt b), c) und d) für verschiedene Abschnitte von Bits, die jeweils um eine Rahmenlänge plus einem Bit vom vorherigen Abschnitt von Bits verschoben sind, bis festgestellt wird, dass der Testzählerwert für einen spezifischen Abschnitt einem gültigen Rahmenzählerwert entspricht.

8. Verfahren nach einem der Ansprüche 3 bis 7, ferner umfassend:
falls der Testzählerwert (101) einem gültigen Rahmenzählerwert entspricht und der aktuelle Synchronisationsstatus unsynchronisiert ist,
Setzen des Synchronisationsstatus auf vorsynchronisiert und Setzen eines vorherigen Zählerwerts auf den Testzählerwert; oder wobei das Verfahren, falls der Synchronisationsstatus auf vorsynchronisiert oder synchronisiert gesetzt ist, ferner Folgendes umfasst:
Lesen eines dritten Abschnitts von Bits, der entlang des Bitstroms um eine Rahmenlänge in Bezug auf die Bits des spezifischen Abschnitts verschoben ist, für den festgestellt wurde, dass der Testzählerwert einem gültigen Rahmenzählerwert entspricht.

9. Verfahren nach Anspruch 8, wobei das Verfahren, falls der Synchronisationsstatus auf vorsynchronisiert oder synchronisiert gesetzt ist, ferner Folgendes umfasst:
Ausführen von Schritt b), c) für den dritten Abschnitt von Bits; und
Überprüfen, ob der Testrahmenzählerwert für den dritten Abschnitt als Nächstes in der Folge auf den vorherigen Zählerwert folgt; oder
wobei das Verfahren, falls der Synchronisationsstatus auf vorsynchronisiert oder synchronisiert gesetzt ist, ferner Folgendes umfasst:
falls der Testrahmenzählerwert nicht einem gültigen Rahmenzählerwert entspricht oder der Testzählerwert nicht als Nächstes in der Folge auf den vorherigen Zählerwert folgt und falls eine Anzahl von ungültigen Rahmen mehr als eine erste Schwellenanzahl beträgt,
Setzen des Synchronisationsstatus auf unsynchronisiert.

10. Verfahren nach Anspruch 9, wobei das Verfahren, falls der Synchronisationsstatus auf synchronisiert gesetzt ist, ferner Folgendes umfasst:
falls der Testrahmenzählerwert nicht einem gültigen Rahmenzählerwert entspricht oder der Testrahmenzählerwert nicht als Nächstes in der Folge auf den vorherigen Zählerwert folgt und falls eine Anzahl von ungültigen Rahmen nicht mehr als eine erste Schwellenanzahl beträgt,
Erhöhen der Anzahl von ungültigen Rahmen um eins; und
Beibehalten des Synchronisationsstatus als synchronisiert.

11. Verfahren nach einem der Ansprüche 9 bis 10, wobei das Verfahren, falls der Synchronisationsstatus auf synchronisiert gesetzt ist, ferner Folgendes umfasst:
falls der Testrahmenzählerwert nicht einem gültigen Rahmenzählerwert entspricht oder der Testrahmenzählerwert nicht als Nächstes in der Folge auf den vorherigen Zählerwert folgt und falls eine Anzahl von ungültigen Rahmen nicht mehr als eine erste Schwellenanzahl beträgt,
Inkrementieren des vorherigen Zählerwerts um eins; oder wobei das Verfahren, falls der Synchronisationsstatus auf vorsynchronisiert gesetzt ist, ferner Folgendes umfasst:
falls der Testzählerwert einem gültigen Rahmenzählerwert entspricht und der Testzählerwert als Nächstes in der Folge auf den vorherigen Zählerwert folgt und falls eine Anzahl von gültigen Rahmen nicht mehr als eine zweite Schwellenanzahl beträgt,
Erhöhen der Anzahl von gültigen Rahmen um eins; und
Setzen des vorherigen Zählerwert als den Testzählerwert; und
Beibehalten des Synchronisationsstatus als vorsynchronisiert.

12. Verfahren nach einem der Ansprüche 9 bis 11, wobei das Verfahren, falls der Synchronisationsstatus auf vorsynchronisiert oder synchronisiert gesetzt ist, ferner Folgendes umfasst:
falls der Testzählerwert einem gültigen Rahmenzählerwert entspricht und der Testzählerwert als Nächstes in der Folge auf den vorherigen Zählerwert folgt und falls eine Anzahl von gültigen Rahmen mehr als eine zweite Schwellenanzahl beträgt,
Setzen der Anzahl von ungültigen Rahmen auf null;
Setzen des vorherigen Zählerwert als den Testzählerwert; und
Setzen des Synchronisationsstatus auf synchronisiert.

13. Rahmen-Header zur Rahmensynchronisation in einem Funkzugangsnetzwerk für Funk-Fronthaul und/oder - Backhaul, wobei der Rahmen-Header Folgendes umfasst:
ein erstes Feld (101), das einen Rahmenzählerwert umfasst, der die Nummer des Rahmens in der Folge von Rahmen in einem Funkzugangsnetzwerk darstellt; und
ein zweites Feld (102), das Paritätsprüfbits zum Überprüfen der Gültigkeit des Rahmenzählerwerts umfasst, wobei die Paritätsprüfbits verwendet werden können, um zu überprüfen, ob der Rahmenzählerwert einem gültigen Rahmenzählerwert entspricht;
und wobei die Paritätsprüfbits verwendet werden können, um die Überprüfung des Rahmenzählerwerts zu korrigieren, falls der Rahmenzählerwert nicht einem gültigen Rahmenzählerwert entspricht.

14. Rahmensynchronisationsvorrichtung (600) zum Bereitstellen von Rahmensynchronisation in einem Funkzugangsnetzwerk für Funk-Fronthaul und/oder - Backhaul, wobei die Rahmensynchronisationsvorrichtung einen Prozessor (601) und einen Speicher (602) umfasst, wobei der Speicher Anweisungen enthält, die bei Ausführung durch den Prozessor den Prozessor zum Durchführen des Verfahrens nach Anspruch 1 veranlassen.

15. Rahmensynchronisationsvorrichtung nach Anspruch 14, wobei der Prozessor zum Durchführen des Verfahrens nach einem der Ansprüche 2 bis 12 konfiguriert ist.

## Revendications

1. Procédé de synchronisation de trame dans un réseau d'accès radio pour un fronthaul et/ou backhaul radio, le procédé comprenant :
a) la réception (201) d'un flux de bits dans un réseau d'accès radio, le flux comprenant une séquence de trames, dans lequel chaque trame comprend une valeur de compteur de trame représentant le numéro de la trame dans la séquence, et des bits de contrôle de trame pour contrôler la validité de la valeur de compteur de trame ;
b) le décodage (202) d'une première section de bits comprenant une première partie (101) représentant une valeur de compteur de trame d'essai et comprenant une deuxième partie (102) représentant des bits de contrôle de parité ;
c) le contrôle (203) si la valeur de compteur de trame d'essai correspond à une valeur de compteur de trame valide en utilisant les bits de contrôle de parité et, si tel n'est pas le cas, la correction de la valeur de compteur de trame d'essai en utilisant les bits de contrôle de parité ; et
d) la synchronisation (204) selon la détermination que la valeur de compteur de trame d'essai correspond à une valeur de compteur de trame valide.

2. Procédé selon la revendication 1, dans lequel les bits de contrôle de parité sont deux codes de Hamming [8,4].

3. Procédé selon la revendication 1 ou 2, dans lequel la synchronisation (204) selon que la valeur de compteur de trame d'essai (101) correspond à une valeur de compteur de trame valide comprend la détermination d'un état de synchronisation, dans lequel l'état de synchronisation est : synchronisé, non synchronisé ou pré-synchronisé, dans lequel l'état pré-synchronisé est un état qui permet à l'état de synchronisation d'être changé à synchronisé.

4. Procédé selon la revendication 3, comprenant en outre :
si la valeur de compteur de trame d'essai (101) ne correspond pas à une valeur de compteur de trame valide et l'état de synchronisation est actuellement non synchronisé,
la réinitialisation de l'état de synchronisation à non synchronisé.

5. Procédé selon la revendication 4, comprenant en outre, si l'état de synchronisation est défini à non synchronisé :
le décodage d'une deuxième section de bits du flux de bits, dans lequel la deuxième section de bits est différente de la première section de bits ; et
la réalisation des étapes b), c) et d) pour la deuxième section de bits à la place de la première section de bits.

6. Procédé selon la revendication 5, dans lequel la deuxième section de bits est déplacée d'une longueur de trame plus un bit le long du flux de bits par rapport à la première section de bits.

7. Procédé selon la revendication 6, comprenant en outre la répétition des étapes b), c) et d) pour différentes sections de bits, chacune étant déplacée d'une longueur de trame plus un bit par rapport à la section de bits précédente, jusqu'à ce que la valeur de compteur d'essai pour une section de bits particulière corresponde à une valeur de compteur de trame valide.

8. Procédé selon l'une quelconque des revendications 3 à 7, comprenant en outre :
si la valeur de compteur d'essai (101) correspond à une valeur de compteur de trame valide et l'état de synchronisation actuel est non synchronisé,
la définition de l'état de synchronisation à pré-synchronisé et la définition d'une valeur de compteur précédente à la valeur de compteur d'essai ; ou, si l'état de synchronisation est défini à pré-synchronisé ou à synchronisé, le procédé comprend en outre :
la lecture d'une troisième section de bits déplacée d'une longueur de trame le long du flux de bits par rapport à la section de bits particulière pour laquelle la valeur de compteur de trame d'essai correspond à une valeur de compteur de trame valide.

9. Procédé selon la revendication 8, dans lequel, si l'état de synchronisation est défini à pré-synchronisé ou à synchronisé, le procédé comprend en outre :
la synchronisation des étapes b), c) pour la troisième section de bits ; et
le contrôle si la valeur de compteur de trame d'essai pour la troisième section suit la valeur de compteur précédente en séquence ; ou
dans lequel, si l'état de synchronisation est défini à pré-synchronisé ou à synchronisé, le procédé comprend en outre :
si la valeur de compteur de trame d'essai ne correspond pas à une valeur de compteur de trame valide ou si la valeur de compteur de trame d'essai ne suit pas la valeur de compteur précédente en séquence, et si un décompte de trames non valides est supérieur à un premier nombre seuil,
la définition de l'état de synchronisation à non synchronisé.

10. Procédé selon la revendication 9, dans lequel, si l'état de synchronisation est défini à synchronisé, le procédé comprend en outre :
si la valeur de compteur de trame d'essai ne correspond pas à une valeur de compteur de trame valide ou si la valeur de compteur de trame d'essai ne suit pas la valeur de compteur précédente en séquence, et si un décompte de trames non valides n'est pas supérieur à un premier nombre seuil,
l'augmentation du décompte de trames non valides d'une unité ; et
le maintien de l'état de synchronisation à synchronisé.

11. Procédé selon l'une quelconque des revendications 9 et 10, dans lequel, si l'état de synchronisation est défini à synchronisé, le procédé comprend en outre :
si la valeur de compteur de trame d'essai ne correspond pas à une valeur de compteur de trame valide ou si la valeur de compteur de trame d'essai ne suit pas la valeur de compteur précédente en séquence, et si un décompte de trames non valides n'est pas supérieur à un premier nombre seuil,
l'incrémentation de la valeur de compteur précédente d'une unité ; ou, dans lequel, si l'état de synchronisation est défini à pré-synchronisé, le procédé comprend en outre :
si la valeur de compteur de trame d'essai correspond à une valeur de compteur de trame valide et si la valeur de compteur de trame d'essai suit la valeur de compteur précédente en séquence, et si un décompte de trames valides n'est pas supérieur à un deuxième nombre seuil,
l'augmentation du décompte de trames valides d'une unité ;
la définition de la valeur de compteur précédente en tant que valeur de compteur de trame d'essai ; et
le maintien de l'état de synchronisation à pré-synchronisé.

12. Procédé selon l'une quelconque des revendications 9 à 11, dans lequel, si l'état de synchronisation est défini à pré-synchronisé ou à synchronisé, le procédé comprend en outre :
si la valeur de compteur de trame d'essai correspond à une valeur de compteur de trame valide et si la valeur de compteur de trame d'essai suit la valeur de compteur précédente en séquence, et si un décompte de trames valides est supérieur à un deuxième nombre seuil,
la définition du décompte de trames non valides à zéro ;
la définition de la valeur de compteur précédente à la valeur de compteur de trame d'essai ; et
la définition de l'état de synchronisation à synchronisé.

13. En-tête de trame pour une synchronisation de trame dans un réseau d'accès radio pour un fronthaul et/ou backhaul radio, l'en-tête de trame comprenant :
un premier champ (101) comprenant une valeur de compteur de trame représentant le numéro de la trame dans une séquence de trames dans un réseau d'accès radio ; et
un deuxième champ (102) comprenant des bits de contrôle de parité pour contrôler la validité de la valeur de compteur de trame, dans lequel les bits de contrôle de parité sont utilisables pour contrôler si la valeur de compteur de trame correspond à une valeur de compteur de trame valide ;
et dans lequel les bits de contrôle de parité sont utilisables pour corriger la valeur de compteur de trame si la valeur de compteur de trame ne correspond pas à une valeur de compteur de trame valide.

14. Appareil de synchronisation de trame (600) pour fournir une synchronisation de trame dans un réseau d'accès radio pour un fronthaul et/ou backhaul radio, l'appareil de synchronisation de trame comprenant un processeur (601) et une mémoire (602), ladite mémoire contenant des instructions qui, lorsqu'elles sont exécutées par le processeur, amènent le processeur à réaliser le procédé selon la revendication 1.

15. Appareil de synchronisation de trame selon la revendication 14, dans lequel le processeur est configuré pour réaliser le procédé selon l'une quelconque des revendications 2 à 12.
